# EUROPÄISCHE PATENTSCHRIFT

(11) **EP 1 041 362 B1**
(45) Veröffentlichungstag und Bekanntmachung des Hinweises auf die Patenterteilung: **09.04.2008**
(21) Anmeldenummer: 00105756.1
(22) Anmeldetag: 17.03.2000
(51) Int. Cl.: G01C 21/36, G08G 1/0968

(54) **Eingabeverfahren in ein Fahrerinformationssystem**
Data entry method in a driver information system
Procédé de saisie dans un système d'information pour conducteur

(30) Priorität: 31.03.1999 DE 19914631
(43) Veröffentlichungstag der Anmeldung: 04.10.2000
(73) Patentinhaber: ROBERT BOSCH GMBH, 70442 Stuttgart (DE)
(72) Erfinder: Kossira, Martin, 71672 Marbach am Neckar (DE); Woestemeyer, Stefan, 31135 Hildesheim (DE); Gaertner, Ulrich, 31171 Nordstemmen (DE); Pflug, Christopher, 31134 Hildesheim (DE)

(56) Entgegenhaltungen:
- EP-A- 0 633 452
- US-A- 5 231 691
- US-A- 5 874 939
- PATENT ABSTRACTS OF JAPAN vol. 1998, no. 08, 30. Juni 1998 (1998-06-30) & JP 10 063673 A (NEC CORP), 6. März 1998 (1998-03-06)
- CARLSON S ET AL: "APPLICATION OF SPEECH RECOGNITION TECHNOLOGY TO ITS ADVANCED TRAVELER INFORMATION SYSTEMS" PACIFIC RIM TRANSTECH CONFERENCE. VEHICLE NAVIGATION AND INFORMATION SYSTEMS CONFERENCE PROCEEDINGS. WASHINGTON, JULY 30 - AUG. 2, 1995, NEW YORK, IEEE, US, Bd. CONF. 6, 30. Juli 1995 (1995-07-30), Seiten 118-125, XP000641143 ISBN: 0-7803-2588-5

## Beschreibung

### Stand der Technik

Die Erfindung geht aus von einem Verfahren zur Eingabe in ein Fahrerinformationssystem nach der Gattung des Hauptanspruchs. Es sind schon Fahrerinformationssysteme für die Verwendung in einem Fahrzeug bekannt, speziell Navigationssysteme, bei denen die Eingabe einer Folge von Buchstaben und/oder Zahlen über eine Tastatur beziehungsweise einen Touch-Screen-Monitor möglich ist. Ferner sind Fahrerinformationssysteme bekannt, bei denen die Eingabe einer Folge von Buchstaben und/oder Zahlen über eine Spracherkennung möglich ist. Auch bei diesen Geräten ist im allgemeinen eine Eingabe von Buchstaben und/oder Zahlen über Tasten möglich. Hat sich der Benutzer jedoch während der Eingabe einer Folge von Buchstaben und/oder Zahlen für eine der beiden Eingabemöglichkeiten Tasteneingabe oder Spracheingabe entschieden, so muß die Eingabe auch über diese Eingabemöglichkeit weitergeführt und beendet werden. Aus US-5231691 ist ein Spracherkennungssystem bekannt, das mit einer Tastatur Konbiniert werden kann und abwechselnd Sprach- und Tastatureingaben ermöglicht.

### Vorteile der Erfindung

Das erfindungsgemäße Verfahren mit den Merkmalen des Hauptanspruchs hat demgegenüber den Vorteil, daß ein Wechsel des Eingabeverfahrens zwischen einer Spracheingabe und einer Eingabe über Tasten auch während der Eingabe einer einzigen Folge von Buchstaben und/oder Zahlen möglich ist. Insbesondere wird bei der Eingabe eines jeden Buchstabens bzw. einer jeden Zahl in der Folge von Buchstaben und/oder Zahlen geprüft, ob eine Eingabe über Spracheingabe oder über Tasten erfolgen soll. Indem ein Benutzer somit zwischen den beiden Eingabemöglichkeiten auch während einer Eingabe wechseln kann, ist es z.B. möglich, bei plötzlich auftretenden Nebengeräuschen, die die Spracheingabe stören können, auf die Eingabe über Tasten zu wechseln. Weiterhin ist es möglich, wartet ein Benutzer in seinem Fahrzeug an einer Ampel, von der Tasteneingabe auf die Spracheingabe zu wechseln, sobald die Ampel dem Benutzer die Weiterfahrt erlaubt. Hierdurch wird eine weitere Tasteneingabe während der Fahrt vermieden, welche die Fahrsicherheit negativ beeinflussen kann. Dabei kann ein Wechsel während der Eingabe beliebig oft erfolgen, bis die gesamte Folge von Buchstaben und/oder Zahlen in das Fahrerinformationssystem eingegeben ist. Muß der Benutzer z.B. nach wenigen Metern bereits wieder anhalten, so kann er problemlos von der Spracheingabe wieder auf die Tasteneingabe wechseln.

Die Möglichkeit, zwischen verschiedenen Eingabearten zu wechseln, ist insbesondere bei Fahrerinformationssystemen von Vorteil. Denn ein Fahrerinformationssystem kann z.B. eine Navigationsvorrichtung zur Navigation eines Kraftfahrzeugs in einem Straßennetz beinhalten, wobei durch einen Benutzer ein Startort und ein Zielort in die in dem Fahrerinformationssystem befindliche Navigationsvorrichtung eingegeben werden muß. Hierzu ist es erforderlich, eine Ortsbezeichnung einzugeben, die möglicherweise recht viele Zeichen umfaßt. Gleiches gilt für ein in das Fahrerinformationssystem integrierte Telefon, bei dem z.B. die Rufnummer oder ein Name eines Anzurufenden durch den Benutzer eingegeben wird. Bei beiden Anwendungen ermöglicht das erfindungsgemäße Eingabeverfahren dem Benutzer, auch während der Eingabe einer Folge von Buchstaben und/oder Zahlen, also z.B. eines Ortsnamens oder einer Telefonnummer, jeweils die Eingabe über die für den Benutzer in diesem Moment optimale Eingabe durchzuführen.

Durch die in den Unteransprüchen aufgeführten Maßnahmen sind vorteilhafte Weiterbildungen und Verbesserungen des im Hauptanspruch angegebenen Verfahrens zur Eingabe möglich. Besonders vorteilhaft ist es, daß die Eingabe eines Buchstabens oder einer Zahl über die Spracheingabe unterdrückt wird, sobald eine Taste gedrückt ist und daß eine Spracheingabe erst dann wieder erfolgen kann, wenn der eingegebene Buchstabe bzw. die eingegebene Zahl von dem Fahrerinformationssystem erfaßt worden ist, z.B. indem ein Tastaturspeicher ausgelesen wird oder indem der eingegebene Buchstabe bzw. die Zahl von einer Eingabeeinheit gespeichert wird. Hierdurch wird vermieden, daß die Eingabe über Tasten und die Spracheingabe derart in Konflikt geraten, daß Zeichen in der Reihenfolge vertauscht werden.

Weiterhin ist es vorteilhaft, daß eine Aktivierung der Eingabe über eine Aktivierung einer Funktion des Fahrerinformationssystems erfolgt, z. B. der Telefonfunktion oder der Navigationsfunktion. Eine zusätzliche Aktivierung über einen gesprochenen Befehl bzw. über einen Tastendruck ist dann nicht mehr erforderlich.

Es ist ferner vorteilhaft, daß eine eingegebene Folge von Buchstaben und/oder Zahlen mit in dem Fahrerinformationssystem gespeicherten Folgen von Buchstaben und/oder Zahlen verglichen wird und daß die eingegebene Folge von Buchstaben und/oder Zahlen durch das Fahrerinformationssystem automatisch zu der gespeicherten Folge von Buchstaben und/oder Zahlen vervollständigt wird, falls nur noch eine Kombination der eingegebenen Folge von Buchstaben und/oder Zahlen zu einer in dem Fahrerinformationssystem gespeicherten Folge von Buchstaben und/oder Zahlen möglich ist. Gibt z.B. ein Benutzer bei der Navigationsfunktion des Fahrerinformationssystems einen Ortsnamen als Zielort ein, und ist nach Eingabe eine Anzahl von Buchstaben nur noch eine Kombination der eingegebenen Buchstaben zu einem in dem Fahrerinformationssystem gespeicherten Zielort möglich, so schlägt das Fahrerinformationssystem dem Benutzer diesen Zielort vor. Der Benutzer kann nun in erfindungsgemäßer Weise über Spracheingabe oder über Tasten diesen Zielort bestätigen oder ablehnen und seine Eingabe beenden.

Weiterhin ist es vorteilhaft, daß neben den Buchstaben und/oder Zahlen Sonderzeichen, z.B. das Zeichen "+" zum automatischen Ergänzen einer Ländervorwahl, oder Steuerzeichen in der erfindungsgemäßen Weise eingebbar sind, damit auch eine Steuerung der Eingabe auf dem für den Benutzer optimalen Eingabeweg erfolgen kann.

Auch ist es vorteilhaft, daß bei einer unklaren und/oder fehlerhaften Eingabe eine Warnung vorzugsweise durch eine Sprachausgabe des Fahrerinformationssystems ausgegeben wird.

### Zeichnung

Ausführungsbeispiele der Erfindung sind in der Zeichnung dargestellt und in der nachfolgenden Beschreibung näher erläutert. Figur 1 zeigt einen ersten Teil des erfindungsgemäßen Verfahrens, die Figuren 2, 3, 4 und 5 zeigen weitere Teile des erfindungsgemäßen Verfahrens. Figur 6 zeigt ein erfindungsgemäßes Fahrerinformationssystem.

### Beschreibung des Ausführungsbeispiels

Das erfindungsgemäße Verfahren wird anhand der Eingabe einer Telefonnummer in ein Fahrerinformationssystem mit einer Telefonvorrichtung erläutert. Die Telefoneinrichtung ist dabei vorzugsweise ein Funktelefon, über das die Verbindung zu einem Mobilfunknetz herstellbar ist. Das erfindungsgemäße Verfahren zur Eingabe ist dabei nicht auf die Verwendung für eine Telefonvorrichtung begrenzt. So kann z.B. die Eingabe eines Ortsnamens in eine Navigationsvorrichtung oder die Eingabe des Namens eines Radiosenders in eine Radiovorrichtung, um diesen Radiosender auszuwählen, auf die gleiche, erfindungsgemäße Weise erfolgen. Die telefonspezifischen Funktionen sind dann entsprechend durch navigationsspezifische bzw. radiospezifische Funktionen zu ersetzen.

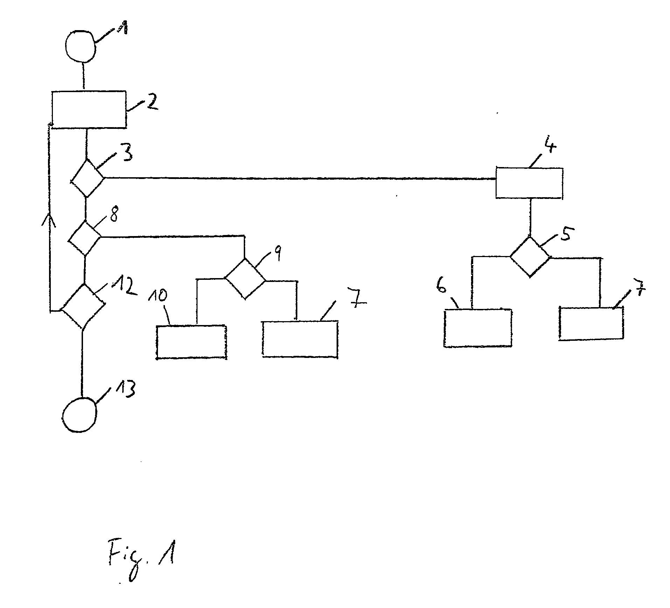

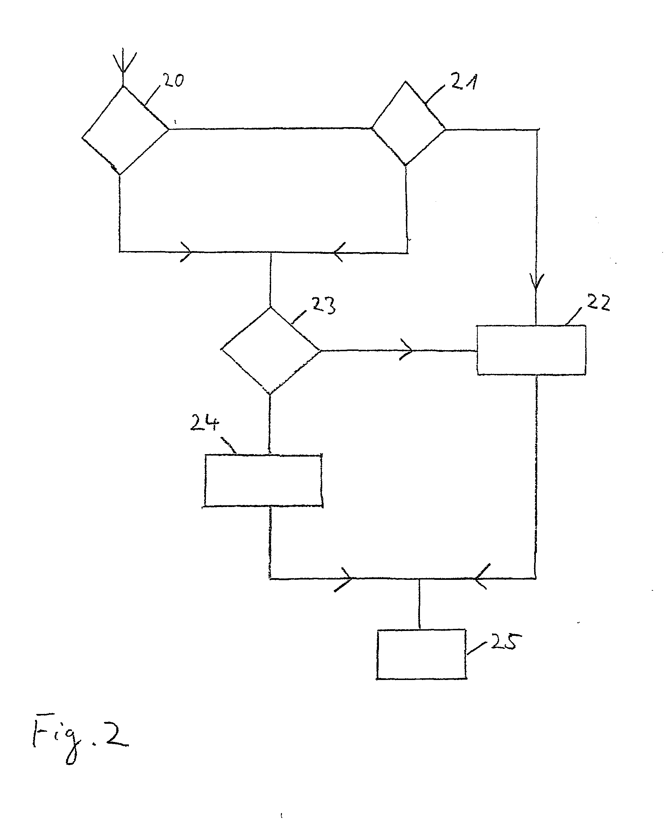

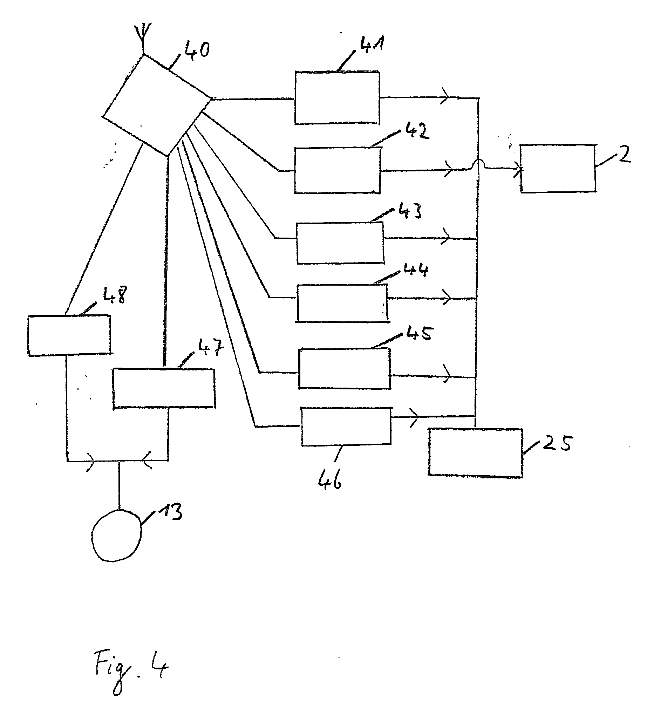

In der Figur 1 ist ein erster Teil eines erfindungsgemäßen Verfahrens zur Eingabe einer Telefonnummer in ein Fahrerinformationssystem mit Telefonfunktion dargestellt. Der Beginn der Eingabe erfolgt über eine Aktivierung 1. Die Aktivierung 1 kann automatisch bei einer Aktivierung der Telefonfunktion sowohl über eine Spracheingabe als auch über eine Aktivierungstaste erfolgen. Ist die Telefonfunktion bereits aktiviert, so kann die Aktivierung 1 der Eingabe über eine Taste bzw. eine Spracheingabe zur Aktivierung der Eingabe erfolgen. Eine Eingabeeinheit des Fahrerinformationssystems geht nach der Aktivierung in einen Grundzustand 2 über, von dem aus in regelmäßigen Zeitabständen eine Abfrage sowohl einer Tastatur als auch der Spracheingabe erfolgt. In einem ersten Abfrageschritt 3 wird abgefragt, ob seit der letzten Abfrage der Tastatur eine Taste gedrückt wurde. War dies nicht der Fall, so wird zu dem zweiten Abfrageschritt verzweigt. War dies der Fall, so wird in einem Verfahrensschritt 4 die Spracheingabe deaktiviert, so daß eine eindeutige Eingabe durch den Benutzer möglich ist, indem der Tastatur bei einer gedrückten Taste einen Vorrang gegenüber der Spracheingabe gegeben wird. In einem ersten Entscheidungsschritt 5 wird anschließend geprüft, ob eine Sondertaste, insbesondere eine Befehlstaste gedrückt wurde. In diesem Fall wird eine Sondertastenauswertung 6 vorgenommen. Wird dagegen eine Zahl oder eine "+"-Zeichentaste gedrückt, so wird mit der Zeichenauswertung 7 fortgefahren. Die Zeichenauswertung 7 ist in Figur 2 und die Sondertastenauswertung 6 ist in Figur 4 dargestellt. Hier und in der folgenden Beschreibung des Ausführungsbeispiels steht der Ausdruck "zeichen" für einen Buchstaben, eine Zahl oder für das "+"-Zeichen.

In dem zweiten Abfrageschritt 8 wird überprüft, ob die Spracheingabe seit der letzten Abfrage, falls sie nicht deaktiviert war, ein Zeichen erfaßt hat. War dies nicht der Fall, so wird zu dem dritten Abfrageschritt 12 verzweigt. In dem dritten Abfrageschritt 12 wird überprüft, wie lange bereits keine Eingabe über eine Taste bzw. über die Spracheingabe erfolgt ist. Ist dieser Zeitraum kürzer als eine vorgegebene Zeitspanne, z.B. 2 Minuten, wird zu dem Grundzustand 2 der Eingabeeinheit zurückverzweigt. Ist die Zeitspanne hingegen größer oder gleich der vorgegebenen Zeitspanne, so wird das Verfahren in einem Abschlußschritt 13 beendet. Da keine Eingabe einer Folge von Zeichen erfolgt ist, wird an das Fahrerinformationssystem in dem Abschlußschritt 13 keine solche Folge übergeben.

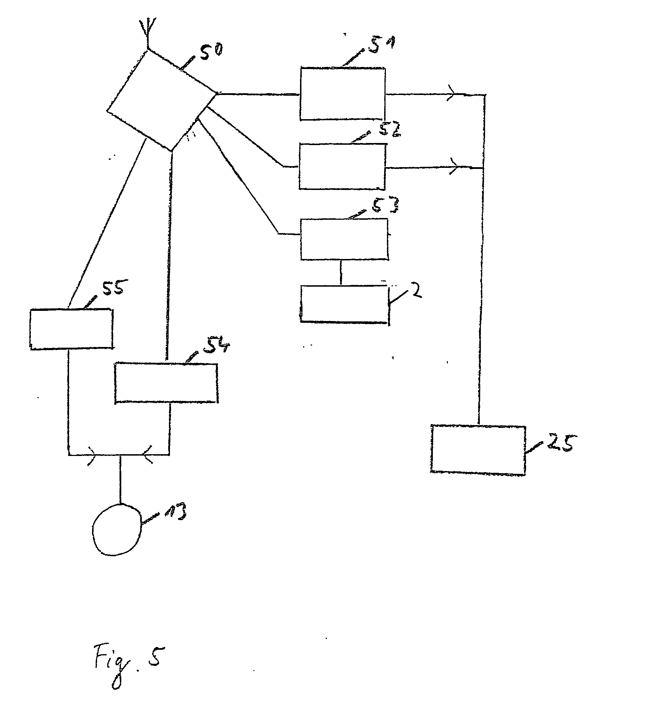

Wird in dem zweiten Abfrageschritt 8 festgestellt, daß eine Spracheingabe erfolgt ist, wird zu dem zweiten Entscheidungsschritt 9 verzweigt. In dem zweiten Entscheidungsschritt 9 wird überprüft, ob ein Sonderbefehl eingegeben worden ist. Ist ein Sonderbefehl eingegeben worden, so wird zu einer Sonderbefehlsauswertung 10 weiterverzweigt. Ist dagegen ein Zeichen eingegeben worden, so wird zu der Zeichenauswertung 7 weiterverzweigt. Die Zeichenauswertung 7 ist in Figur 2 dargestellt. Die Sonderbefehlsauswertung 10 ist in Figur 5 dargestellt.

In der Figur 2 ist die Zeichenauswertung 7 dargestellt. Die Auswertung wird entweder von dem ersten Entscheidungsschritt 5 oder dem zweiten Entscheidungsschritt 9 aus erreicht und beginnt mit einem ersten Prüfschritt 20, in dem geprüft wird, ob das eingegebene Zeichen das "+"-Zeichen ist. Wird das "+"-Zeichen erkannt, wird zu einem zweiten Prüfschritt 21 verzweigt. In dem zweiten Prüfschritt 21 wird zu einem Prüfschritt 23 verzweigt, falls das "+"-Zeichen das erste Zeichen einer Folge von Zeichen ist. Das "+"-Zeichen wird bei der späteren Wahl durch die Telefonvorrichtung als ein Platzhalter z.B. für den ersten Teil einer Auslansvorwahl interpretiert. Zu dem dritten Prüfschritt 23 wird auch von dem Prüfschritt 20 aus verzweigt, wenn das durch die Spracheingabe erkannte Zeichen nicht das "+"-Zeichen ist. Ist das "+"-Zeichen nicht das erste Zeichen einer Folge von Zeichen, so wird zu einer Fehlermeldungsausgabe 22 verzweigt. In einem dritten Prüfschritt 23 wird überprüft, ob das Ende der Anzeige erreicht ist, ob zum Beispiel eine Anzeige vollständig mit Zeichen gefüllt ist. Ist dies der Fall, wird ebenfalls zu der Fehlermeldungsausgabe 22 verzweigt. Ist dies nicht der Fall, so wird zu einem Verarbeitungsschritt 24 verzweigt. In Verarbeitungsschritt 24 wird das neu ermittelte Zeichen einer Folge von Buchstaben und/oder Zeichen Zugeordnet. Handelt es sich um eine neue Folge, wird das neu ermittelte Zeichen als erstes Zeichen festgelegt. Ist es keine neue Folge so wird es in der bisherigen Folge von Buchstaben oder Zeichen am Ende hinzugefügt. Von dem Verarbeitungsschritt 24 wie auch von der Fehlermeldungsausgabe 22 wird zu einer Spracheingabeüberprüfung 25 weiterverzweigt.

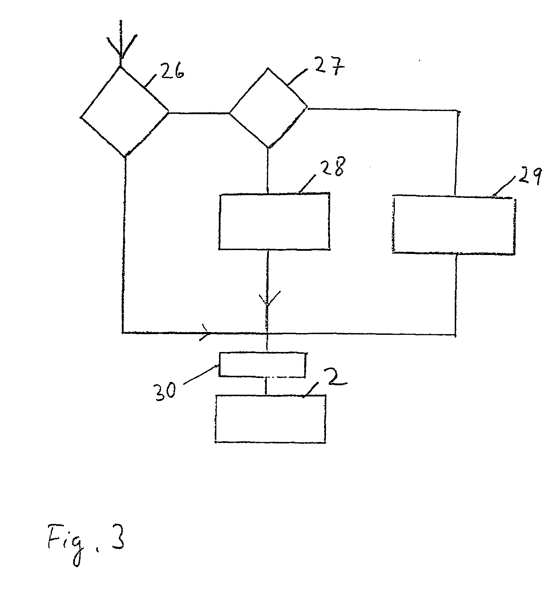

Die Spracheingabeüberprüfung 25 ist in der Figur 3 dargestellt. Sie beginnt mit einem ersten Prüfschritt 26 der Spracheingabeüberprüfung, in dem geprüft wird, ob die Spracheingabe aktiviert war. War die Spracheingabe nicht aktiviert, so wird zu einem Aktivierungsschritt 30 weiterverzweigt. In dem Aktivierungsschritt 30 wird die Spracheingabe wieder freigeschaltet und der Speicher der Spracheingabeeinheit wird zurückgesetzt, falls sie ein Benutzer nicht über einen Deaktivierungsbefehl abgeschaltet hat. Danach wird die Eingabeeinheit wieder in den Grundzustand 2 überführt und das erfindungsgemäße Verfahren nach Figur 1 wird für die Eingabe des nächsten Zeichens bzw. Befehls fortgeführt, wie in der Beschreibung zu der Figur 1 erläutert. Der Aktivierungsschritt 30 stellt sicher, daß nun für das nächste Zeichen auch wieder die Eingabe über die Spracheingabe ermöglicht wird, falls die der Benutzer nicht durch einen Deaktivierungsbefehl abgeschaltet hat.

Wird in dem ersten Prüfschritt 26 festgestellt, daß die Spracheingabe zuletzt aktiv war, so wird in einem zweiten Prüfschritt 27 überprüft, ob das "+"-Zeichen bzw. eine Zahl eingegeben worden ist. War dies nicht der Fall, so wird in einem Verfahrensschritt 28 festgelegt, daß für die nächste Spracheingabe ein Standarddatensatz benutzt wird. Nach dem Verfahrensschritt 28 wird ebenfalls zu dem Aktivierungsschritt 30 verzweigt.

Wird in dem zweiten Prüfschritt 27 festgestellt, daß das letzte, angegebene Zeichen das "+"-Zeichen oder eine Zahl war, so wird in einem Verfahrensschritt 29 für die Spracheingabe ein spezieller Datensatz festgelegt, so daß bei der nächsten Spracherfassung zunächst überprüft wird, ob das gesprochene Zeichen eine Zahl ist. Hierdurch wird die Spracherkennung insbesondere bei einer Telefonnummer, bei der viele Zahlen aufeinanderfolgen, erleichtert. Andere Zeichen bzw. Befehle können mit diesem speziellen Datensatz ebenfalls erfaßt werden. Die Erkennung kann jedoch geringfügig länger dauern. Von dem Verfahrensschritt 29 wird ebenfalls zu dem Aktivierungsschritt 30 verzweigt.

In der Figur 4 wird die Sondertastenauswertung 6 dargestellt, die mit einem Entscheidungsschritt für Sondertasten 40 beginnt, in dem die Identität der eingegebenen Sondertaste geprüft wird. Wird eine Sondertaste "Spracheingabe aktivieren" gedrückt, so wird zu einem Verfahrensschritt "Spracheingabe aktivieren" 41 verzweigt.

In diesem Verfahrensschritt wird festgelegt, daß zumindest das nächste Zeichen über die Spracheingabe eingegeben werden soll. Anschließend wird zu der Spracheingabeüberprüfung 25 weiterverzweigt. Wird die Taste "Spracheingabe deaktivieren" gedrückt, so wird von dem Entscheidungsschritt für die Sondertaste 40 zu einem Verfahrensschritt "Spracheingabe deaktivieren" 42 weiterverzweigt. In diesem Verfahrensschritt wird die Spracheingabe deaktiviert. Dies kann unter anderem bei starken Nebengeräuschen oder Gesprächen im Fahrzeug, wodurch die Spracheingabe möglicherweise gestört werden kann, vorteilhaft sein. Eine Aktivierung ist über die Taste "Spracheingabe aktivieren" oder bei der Eingabe einer neuen Folge von Zeichen möglich. Nach dem Verfahrensschritt 42 wird zu dem Grundzustand 2 weiterverzweigt. Wird die Taste "Zeichen löschen" gedrückt, so wird zu einem Verfahrensschritt "Zeichen löschen" 43 von dem Entscheidungsschritt 40 aus weiterverzweigt. In dem Verfahrensschritt 43 wird das zuletzt eingegebene Zeichen gelöscht. Danach wird zu der Spracheingabeüberprüfung 25 weiterverzweigt. Wird die Taste "alles löschen" gedrückt, so wird von dem Entscheidungsschritt 40 zu einem Verfahrensschritt "alles löschen" 44 weiterverzweigt. Die bisher eingegebene Folge von Buchstaben und/oder Zahlen wird gelöscht. Danach wird zu der Spracheingabeüberprüfung 25 weiterverzweigt. Wird die Taste "obere Nummer anzeigen" gedrückt, so wird zu einem Verfahrensschritt "obere Nummer anzeigen" 45 weiterverzweigt. In diesem Verfahrensschritt wird aus einer Liste, die in einer Anzeige des Fahrerinformationssystems angegeben wird, eine Nummer ausgewählt, die sich oberhalb der aktuell angezeigten Nummer befindet. Die Liste kann eine Liste der zuletzt von einem Benutzer gewählten Rufnummern oder eine Liste von durch den Benutzer gespeicherten Rufnummern sein. Danach wird ebenfalls zur Spracheingabeüberprüfung 25 weiterverzweigt. Wird die Taste "untere Nummer auswählen" gedrückt, wird zu einem Verfahrensschritt "untere Nummer ausgeben" 46 weiterverzweigt. In diesem Verfahrensschritt wird aus der oben genannten Liste von Telefonnummern eine Nummer ausgewählt, die in der Liste unterhalb der aktuell angezeigten Nummer angeordnet ist. Danach wird ebenfalls zur Spracheingabeüberprüfung 25 weiterverzweigt. Wird die Taste "verlassen" gedrückt, so wird zu einem Verfahrensschritt "verlassen" 47 weiterverzweigt. Nach diesem Vefahrensschritt wird zu dem Abschlußschritt 13 weiterverzweigt, ohne daß nun eingegebene Daten in dem Fahrerinformationssystem gespeichert bleiben. Wird dagegen die Taste "wählen" gedrückt, so wird von dem Entscheidungsschritt 40 zu dem Verfahrensschritt "wählen" 48 weiterverzweigt. Von dem Verfahrensschritt 48 wird ebenfalls zu dem Abschlußschritt 13 verzweigt, wobei jedoch eine eingegebene, zu wählende Telefonnummer von der Eingabeeinheit an die Telefonvorrichtung übergeben wird.

In der Figur 5 ist die Sonderbefehlsauswertung 10 dargestellt. Die Sonderbefehlsauswertung 10 beginnt mit einem Entscheidungsschritt für Sonderbefehle 50. Wird von der Spracheingabe der Befehl "Korrektur" erkannt, so wird zu einem Verfahrensschritt 51 verzweigt. In dem Verfahrensschritt 51 wird das zuletzt eingegebene Zeichen gelöscht. Anschließend wird zu der Spracheingabeüberprüfung 25 weiterverzweigt. Wird von der Spracheingabe der Befehl "alles löschen" erkannt, so wird einem Verfahrensschritt 52 weiterverzweigt, im dem die bisher eingegebene Folge von Zeichen gelöscht wird. Anschließend wird ebenfalls zu der Spracheingabeüberprüfung 25 weiterverzweigt. Wird der Befehl "Spracheingabe abschalten" angegeben, so wird zu einem Verfahrensschritt "Spracheingabe abschalten" 53 weiterverzweigt, in dem die Spracheingabe deaktiviert wird, bis eine Aktivierung durch den Druck auf eine Taste zur Aktivierung oder bis die Eingabe einer neuen Folge von Zeichen erfolgt. Anschließend wird direkt zu dem Grundzustand 2 weiterverzweigt. Wird der Befehl "Eingabe abbrechen" eingegeben, so wird zu einem Verfahrensschritt 54 weiterverzweigt, in dem die Eingabe verlassen und zu dem Abschlußschritt 13 weiterverzweigt wird, ohne daß die Folge von angegebenen Buchstaben und/oder Zeichen gespeichert bleibt. Wird die Funktion "wählen" gewählt, wo wird zu dem Verfahrensschritt 55 weiterverzweigt, bei dem die eingegebene Folge von Buchstaben und/oder Zeichen von der Eingabeeinheit an die Telefoneinrichtung weitergegeben wird, so daß insbesondere die eingegebene Nummer gewählt werden kann. Ebenfalls wird zu dem Abschlußschritt 13 weiterverzweigt.

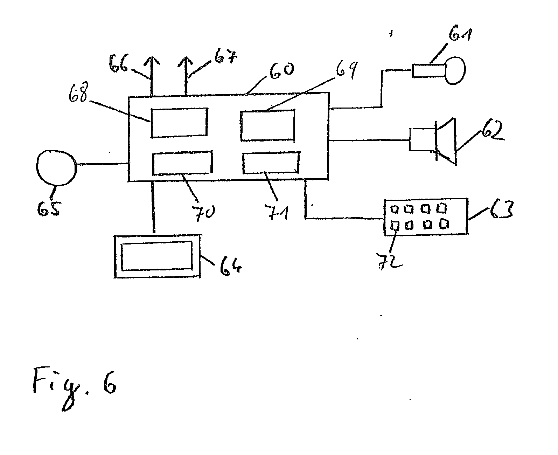

In der Figur 6 ist ein Fahrerinformationssystem 60 dargestellt, mit dem das erfindungsgemäße Verfahren durchführbar ist. Mit dem Fahrerinformationssystem 60 ist ein Mikrofon 61 und ein Lautsprecher 62 verbunden. Ferner ist eine Tastatur 63 mit Tasten 72 vorhanden. Das Fahrerinformationssystem 60 verfügt ferner über eine erste Antenne 66 zum Empfang von GPS-Signalen, die der Ortung dienen, und über eine zweite Antenne 67 zum Empfang von Funkwellen, z.B. Radiosignalen und/oder GSM-Signalen. Ferner verfügt das Fahrerinformationssystem über einen Datenspeicher 65, z.B. für optische Datenträger, sowie eine Anzeigeeinheit 64. Das Fahrerinformationssystem verfügt über eine Telefonvorrichtung 68, eine Navigationsvorrichtung 69, eine Radioeinrichtung 70 und eine Eingabeeinheit 71. In der Eingabeeinheit 71 sind auch für eine Spracheingabe erforderlichen, nicht eingezeichneten Komponenten angeordnet, wie z.B. Rechnereinheit und Speicher. In erfindungsgemäßer Weise kann nun eine Eingabe über das Mikrofon 61 und die Tasten 72 der Tastatur 63 erfolgen. Das erfindungsgemäße Verfahren läuft dabei insbesondere in der Eingabeeinheit 71 ab, die die ermittelte Folge von Buchstaben und/oder Zahlen an die Telefonvorrichtung 68, die Navigationsvorrichtung 69 und/oder die Radiovorrichtung 70 weiterleitet. Für die Informationseingabe in die Navigationsvorrichtung ist dabei z.B. das in der Figur 1 bis 5 beschriebene Verfahren dahingehend abzuändern, daß der Befehlssatz auf die für die Navigationsvorrichtung wichtigen Befehle geändert wird. Solche Befehle sind z.B. "Startort wählen", "Zielort wählen", "schnellste Strecke" oder "kürzeste Wegstrecke". Für die Eingabe in das Radio ist der für das Telefon spezifische Befehlssatz z.B. durch die Befehle "Sender wählen", "Verkehrsfunk wählen", "klassische Musik hören" oder "Radio abschalten" zu ersetzen. Die genannten Befehle sind dabei nicht unbedingt wörtlich einzugeben, sondern können je nach Ausführungsbeispiel durch entsprechende Abkürzungen oder anders lautende Befehle mit entsprechender Bedeutung ersetzt sein.

Über die Anzeige 64 bzw. die Tonausgabe 62 erfolgt eine Rückmeldung über den eingegebenen Befehl bzw. die eingegebene Folge von Zahlen und/oder Buchstaben, so daß der Benutzer eine Rückmeldung darüber erhält, ob dem Fahrerinformationssystem die richtigen Informationen übermittelt werden konnten.

Eine Eingabe nach dem erfindungsgemäßen Verfahren kann nun z.B. wie folgt ablaufen. Über eine Taste wird die Telefonfunktion des Fahrerinformationssystems aktiviert. Über Sprache werden nacheinander Zahlen 0,5,1,2,1 eingegeben. Nun drückt der Fahrer die Tasten 4,9,1,2. Anschließend gibt er über Sprache noch die Zahlen 3,2 ein. Abschließend drückt er die Taste wählen. Die Eingabeeinheit 71 übermittelt an die Telfonvorrichtung 68 die eingegebene Rufnummer "05121491232" sowie den Befehl "wählen". Die Telefonvorrichtung 68 stellt nun die Verbindung her. Ferner ist es möglich, daß die Eingabeinheit über einen Sprachbefehl "Rufnummer eingeben" aktiviert wird. Anschließend gibt der Benutzer ebenfalls über die Spracheingabe die Zahlen 0,5,1,2,1 ein, anschließend über Taste 4,9,1,2,3,2 und fordert abschließend über den Befehl wählen per Spracheingabe die Telefonvorrichtung 68 dazu auf, die angegebene Rufnummer "05121491232" zu wählen.

## Patentansprüche

1. Verfahren zur Eingabe einer Folge von Buchstaben und/oder Zahlen in ein Eingabesystem, wobei die Eingabe der Folge von Buchstaben und/oder Zahlen über Tasten oder über eine Vorrichtung zur Spracheingabe erfolgt, indem nacheinander die einzelnen Elemente der Folge von Buchstaben und/oder Zahlen eingegeben werden, in einem ersten Verfahrensschritt die Eingabe aktiviert wird, in einem zweiten Verfahrensschritt abgefragt wird, ob eine Sprachinformation vorliegt oder ob eine Taste gedrückt wurde, in einem dritten Verfahrensschritt bei einer vorliegenden Sprachinformation der durch die Sprachinformation bestimmte Buchstabe oder die durch die Sprachinformation bestimmte Zahl von dem erfaßt wird und Eingabesystem in dem dritten Verfahrensschritt bei einer gedrückten Taste der durch die Taste bestimmte Buchstabe oder die durch die Taste bestimmte Zahl von dem Eingabesystem erfaßt wird, die Eingabe der Folge von Buchstaben und/oder Zahlen in einem abschließenden Verfahrensschritt durch die Eingabe einer vorgegebenen Taste oder eines vorgegebenen Wortes beendet wird **dadurch gekennzeichnet, daß** die Eingabe der Folge von Buchstaben und/oder Zahlen in einem Fahrer informationssystem erfolgt und daß bei der Eingabe der Folge von Buchstaben und/oder Zahlen zwischen der Eingabe über die Spracheingabe und der Eingabe über die Tasten mindestens ein Wechsel erfolgt.

2. Verfahren nach Anspruch 1, **dadurch gekennzeichnet, dass** einer Eingabe über eine Taste bei einer gedrückten Taste ein Vorrang gegenüber der Spracheingabe gegeben wird.

3. Verfahren nach Anspruch 2, **dadurch gekennzeichnet, dass** eine Eingabe eines Buchstabens oder einer Zahl über die Spracheingabe unterdrückt wird, wenn eine Taste gedrückt wird und dass die Spracheingabe wieder aktiviert wird, nachdem der Buchstabe oder die Zahl, die durch die Taste bestimmt wird, von dem Fahrerinformationssystem erfaßt wurde.

4. Verfahren nach einem der vorhergehenden Ansprüche, **dadurch gekennzeichnet, dass** die in das Fahrerinformationssystem eingegebene Folge von Buchstaben und/oder Zahlen zur Auswahl eines Fahrziels oder zur Auswahl einer Telefonnummer oder zur Auswahl eines Radiosenders verwendet wird.

5. Verfahren nach einem der vorhergehenden Ansprüche, **dadurch gekennzeichnet, dass** eine Aktivierung der Eingabe über eine Aktivierung einer Funktion des Fahrerinformationssystems erfolgt, insbesondere bei einer Aktivierung einer Telefonfunktion und/oder bei einer Aktivierung einer Navigationsfunktion.

6. Verfahren nach einem der vorhergehenden Ansprüche, **dadurch gekennzeichnet, dass** eine eingegebene Folge von Buchstaben und/oder Zahlen mit in dem Fahrerinformationssystem gespeicherten Folgen von Buchstaben und/oder Zahlen verglichen wird und dass die eingegebene Folge von Buchstaben und/oder Zahlen durch das Fahrerinformationssystem automatisch zu der gespeicherten Folge von Buchstaben und/oder Zahlen vervollständigt wird, falls nur noch eine Kombination der eingegebenen Folge von Buchstaben und/oder Zahlen zu einer in dem Fahrerinformationssystem gespeicherten Folge von Buchstaben und/oder Zahlen möglich ist.

7. Verfahren nach einem der vorhergehenden Ansprüche, **dadurch gekennzeichnet, dass** bei einer unklaren und/oder fehlerhaften Eingabe eine Warnung vorzugsweise durch eine Sprachausgabe des Fahrerinformationssystems ausgegeben wird.

8. Verfahren nach einem der vorhergehenden Ansprüche, **dadurch gekennzeichnet, dass** Befehle für die Steuerung der Eingabe, insbesondere eine Korrektur oder eine Beendigung der Eingabe, über Sondertasten oder über Sonderbefehle eingegeben werden können.

## Claims

1. Method for inputting a sequence of letters and/or numbers into an input system, wherein the inputting of the sequence of letters and/or numbers is carried out by means of pushbutton keys or by means of a speech input device in that the individual elements in the sequence of letters and/or numbers are input successively, in a first method step the input is activated, in a second method step it is interrogated as to whether voice information is present or whether a pushbutton key has been pressed, in a third method step, when voice information is present, the letter which is determined by the voice information or the number which is determined by the voice information is sensed by the input system and in the third method step, when a pushbutton key is pressed the letter which is determined by the pushbutton key or the number which is determined by the pushbutton key is sensed by the input system, and the inputting of the sequence of letters and/or numbers is ended in a subsequent method step by inputting a predefined pushbutton key or a predefined word, **characterized in that** the inputting of the sequence of letters and/or numbers takes place in a driver information system, and **in that** during the inputting of the sequence of letters and/or numbers at least one changeover takes place between the inputting by means of voice input and the inputting by means of the pushbutton keys.

2. Method according to Claim 1, **characterized in that** inputting by means of a pushbutton key is given priority over voice input when a pushbutton key is pressed.

3. Method according to Claim 2, **characterized in that** inputting of a letter or of a number by means of voice input is suppressed if a pushbutton key is pressed, and that the voice input is activated again after the letter or the number which is determined by the pushbutton key has been sensed by the driver information system.

4. Method according to one of the preceding claims, **characterized in that** the sequence of letters and/or numbers which has been input into the driver information system is used to select a destination or to select a telephone number or to select a radio transmitter.

5. Method according to one of the preceding claims, **characterized in that** the inputting means is activated by activating a function of the driver information system, in particular when a telephone function is activated and/or when a navigation function is activated.

6. Method according to one of the preceding claims, **characterized in that** a sequence of letters and/or numbers which has been input is compared with sequences of letters and/or numbers which have been stored in the driver information system, and **in that** the sequence of letters and/or numbers which has been input is automatically completed by the driver information system with respect to the stored sequence of letters and/or numbers, if just one combination of the sequence of letters and/or numbers which has been input is possible with respect to a sequence of letters and/or numbers which is stored in the driver information system.

7. Method according to one of the preceding claims, **characterized in that**, when there is an unclear and/or erroneous input, a warning is issued, preferably by a voice output by the driver information system.

8. Method according to one of the preceding claims, **characterized in that** commands for controlling the input, in particular correcting or ending the input, can be entered by means of special keys or by means of special commands.

## Revendications

1. Procédé de saisie d'une succession de lettres et/ou de chiffres dans un système d'entrée selon lequel
la saisie de la suite de lettres et/ou de chiffres se fait par des touches ou par un dispositif de saisie vocale, dans lequel successivement on introduit les différents éléments de la suite de lettres et/ou de chiffres, dans une première étape du procédé on active la saisie,
dans une seconde étape du procédé on demande s'il y a une information vocale ou si une touche a été actionnée,
dans une troisième étape du procédé, en cas de présence d'une information vocale, on saisit la lettre définie par l'information vocale ou le nombre défini par l'information vocale par le système de saisie et
dans la troisième étape du procédé, lorsqu'une touche est enfoncée, on saisit la lettre définie par la touche ou le nombre défini par la touche à l'aide du système de saisie,
on termine la saisie de la suite de lettres et/ou de chiffres dans une étape terminale du procédé par la saisie d'une touche prédéfinie ou d'au moins un mot prédéfini,
**caractérisé en ce que**
la saisie de la suite de lettres et/ou de chiffres se fait dans un système d'informations du conducteur et
lors de la saisie de la suite de lettres et/ou de chiffres, il y a au moins une alternance entre la saisie par l'entrée vocale et celle par les touches.

2. Procédé selon la revendication 1,
**caractérisé en ce que**
la saisie par une touche lorsqu'une touche est enfoncée, est prioritaire par rapport à la saisie vocale.

3. Procédé selon la revendication 2,
**caractérisé en ce que**
la saisie d'une lettre ou d'un nombre par la saisie vocale est neutralisée si une touche est enfoncée et
la saisie vocale est de nouveau activée après avoir saisi la lettre ou le nombre par la touche par le système d'informations du conducteur.

4. Procédé selon l'une des revendications précédentes,
**caractérisé en ce que**
la suite de lettres et/ou de chiffres introduits dans le système d'informations du conducteur est utilisée pour sélectionner une destination ou un numéro de téléphone ou un émetteur radio.

5. Procédé selon l'une des revendications précédentes,
**caractérisé en ce que**
l'activation de la saisie se fait par l'action d'une fonction du système d'informations du conducteur notamment lors d'une activation d'une fonction de téléphone et/ou d'une fonction de navigation.

6. Procédé selon l'une des revendications précédentes,
**caractérisé en ce qu'**
on compare une suite saisie de lettres et/ou de nombres à des suites de lettres et/ou de nombres mémorisés dans le système d'informations du conducteur et
on complète automatiquement la suite saisie de lettres et/ou de nombres par le système d'informations du conducteur pour avoir la suite mémorisée de lettres et/ou de nombres si seulement une combinaison de la suite de lettres et/ou de nombres introduite est possible pour former l'une des suites de lettres et/ou de nombres mémorisés dans le système d'informations du conducteur.

7. Procédé selon l'une des revendications précédentes,
**caractérisé en ce qu'**
en cas d'entrée non claire et/ou erronée, on émet un avertissement, de préférence par une émission vocale du système d'informations du conducteur.

8. Procédé selon l'une des revendications précédentes,
**caractérisé en ce que**
des ordres pour la commande de l'entrée, notamment une correction ou une terminaison de saisie, sont faits par des touches spéciales ou par des ordres spéciaux.
